(19) Europäisches Patentamt
European Patent Office
Office européen des brevets

(11) Veröffentlichungsnummer: **0 278 469 B1**

(12) **EUROPÄISCHE PATENTSCHRIFT**

(45) Veröffentlichungstag der Patentschrift: **04.03.92**

(51) Int. Cl.$^5$: **C01F 7/44**, C09C 1/40

(21) Anmeldenummer: **88101842.8**

(22) Anmeldetag: **09.02.88**

# (54) Verfahren zur Herstellung von Böhmit.

(30) Priorität: **10.02.87 US 13009**

(43) Veröffentlichungstag der Anmeldung:
**17.08.88 Patentblatt 88/33**

(45) Bekanntmachung des Hinweises auf die Patenterteilung:
**04.03.92 Patentblatt 92/10**

(84) Benannte Vertragsstaaten:
**AT BE CH DE ES FR GB GR IT LI LU NL SE**

(56) Entgegenhaltungen:
**EP-A- 0 015 196**
**WO-A-80/01799**
**US-A- 3 958 341**

(73) Patentinhaber: **VEREINIGTE ALUMINIUM-WERKE AKTIENGESELLSCHAFT**
**Berlin - Bonn Postfach 2468 Georg-von-Boeselager-Strasse 25**
**W-5300 Bonn 1(DE)**

(72) Erfinder: **Brown, Neil Dr.**
**Friedrichstrasse 43**
**W-5300 Bonn 1(DE)**

(74) Vertreter: **Müller-Wolff, Thomas, Dipl.-Ing.**
**c/o Vereinigte Aluminium-Werke AG Patent-abteilung Postfach 2468**
**W-5300 Bonn 1(DE)**

EP 0 278 469 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Pigmentfüllstoff aus feinkristallinem Böhmit ($Al_2O_3 . H_2O$) mit hoher spezifischer Oberfläche.

Böhmitteilchen finden Anwendung in der Glas-, Katalysatoren-und Keramikindustrie. Die Böhmitteilchen werden kommerziell hergestellt durch Erhitzen von Aluminiumtrihydroxid (Hydrargillit, chem. Formel: $Al_2O_3 . 3H_2O$) in Wasser bei Temperaturen von 200 - 250°C. Z.B.beschreibt das US-Patent Nr. 3,954,957 (Koenig) ein Verfahren für die Herstellung von Böhmit-Pigment ausgehend von Hydrargillit. Das Verfahren sieht Vorzerkleinern von Hydrargillit auf eine mittlere Korngröße von 1 - 3 µm vor und den Aufschluß von gemahlenem Hydrargillit in der Anwesenheit einer kontrollierten Menge von anorganischer Säure bei Temperaturen zwischen ca. 180 - 250°C während 0,5 - 120 min. Dies führt zur Herstellung eines Böhmitproduktes mit gleichmäßiger Korngröße zwischen 0,2 - 0,7 µm.

Es ist auch bekannt, daß bei Erhitzung von kristallisiertem Hydrargillit aus dem Bayer-Verfahren zur Herstellung von Aluminiumoxid aus Bauxit auf eine Temperatur im Bereich zwischen 120°C und 300°C eine Umwandlung von Hydrargillit zu meßbaren Mengen Böhmit stattfindet, besonders wenn die Erhitzung schnell erfolgt und wenn grobe Hydrargillitteilchen verwandt werden. (S. z.B."Oxides and Hydroxides of Aluminium Technical Paper No. 19", Alcoa Research Laboratories, 1972). Dies ist bekannt als die Festphasenreaktion, da Wasser abwesend ist.

Der mittels Festphasenreaktion hergestellte Böhmit ist eingebettet in die Grundmasse des aktivierten Materials, das dann in einem zweiten Verfahrensschritt entfernt werden muß, um den Böhmit freizusetzen. Im nachfolgenden bezieht sich der Ausdruck "aktiviert" auf die Bestandteile des erhitzten Hydrargillitmaterials, die nicht Böhmit sind.

Es ist daher die Aufgabe der vorliegenden Erfindung, ein Verfahren zur Herstellung von kristallinem Böhmit in Form von feinen Partikeln zu finden.

Eine weitere Aufgabe der vorliegenden Erfindung ist es, ein Verfahren zu entwickeln zur Herstellung von Böhmit mit einer Oberfläche, die erheblich größer ist als man bei Partikeln in der Größenordnung von etwa 1 µm erwarten kann.

Eine weitere Aufgabe der Erfindung ist es, ein neues feinkörniges Böhmitmaterial darzustellen.

## Zusammenfassung der Erfindung

Die vorliegende Erfindung betrifft ein Verfahren zur Herstellung von Böhmit und ein neues Böhmitmaterial.

Das Böhmitherstellungsverfahren besteht aus folgenden Schritten:

Kalzinieren von Hydrargillitteilchen zur Herstellung von Böhmit, eingebettet in einer aktivierten Matrix,

Trennen des Böhmits von dem aktivierten Matrixmaterial und Rückgewinnung des Böhmitmaterials. Überraschenderweise stellte sich heraus, daß der unter den Bedingungen der vorliegenden Erfindung durch die Festkörperreaktion gebildete Böhmit nicht nur kristallin und feinkörnig ist, sondern auch eine spezifische Oberfläche hat, die viel höher (d.h. 4- bis 5-fach) ist als sie bei einem kristallinen Böhmitteilchen in der Größe von 1 µm erwartet wird. Um diese grundlegende technische Erfindung in ein kommerziell verwertbares Verfahren für die Herstellung von kristallinem Böhmit umzusetzen, wurde gefunden, daß das aktivierte Grundmassenmaterial durch das Auflösen in kaustischer Aluminatlauge entfernt werden kann, und zwar in einem solchen Ausmaß, daß das gesamte Verfahren als ein Nebenstrom in den Bayer-Prozeß einbezogen werden kann.

Es wurde auch gefunden, daß wenn die anfängliche Kalzinationstemperatur des Ausgangshydrargillits auf eine Temperatur oberhalb 300°C erhöht wird und er solange erhitzt wird, bis der Glühverlust (Glv.) auf weniger als 20%, vorzugsweise 11-12%, von den etwa 35% Glühverlust des ursprünglichen Hydrargillits gesenkt wird, der Böhmitgehalt einen Maximalwert erreicht, und das aktivierte Matrixmaterial eine unerwartet hohe Löslichkeit in der Dünnlauge des Bayerverfahrens unter den normalen Druck-Temperatur-Verhältnissen (s.z.B. Fig.1) hat.

Dementsprechend beginnt der hier offenbarte Prozeß zur Herstellung des kristallinen Böhmits mit den groben Hydrargillitteilchen aus dem Bayer-Verfahren, unterzieht die groben Partikel einer leichten Kalzination, entfernt das aktivierte nicht-böhmitische Material durch Auflösung in der Dünnlauge des Bayer-Verfahrens und gewinnt so einen feinen kristallinen Böhmit mit erhöhter spezifischer Oberfläche, wobei gleichzeitig eine Lauge mit hohem Aluminiumoxidgehalt in den Hydroxidausrührkreislauf des Bayer-Prozesses zurückgeführt wird.

Kurze Beschreibung der Zeichnungen

Fig.1 ist eine graphische Darstellung der Eigenschaften des kalzinierten Hydrargillits.
Fig.2 ist ein Fließbild der Herstellungsschritte der Böhmitteilchen gemäß der vorliegenden Erfindung.
Fig.3 zeigt Elektronenmikroskopbilder des Ausgangsmaterials Hydrargillit (a) (1000 × vergrößert) und das entstandene Böhmitprodukt (b) (5000 × vergrößert).
Fig.4 zeigt Elektronenmikroskopbilder des entstandenen Böhmitproduktes (a) 30000 × und (b) 50000 × vergrößert.

## Ausführliche Beschreibung der Erfindung

Das Verfahren zur Herstellung von kristallinem Böhmit gemäß der vorliegenden Erfindung beginnt mit den groben Hydrargillitteilchen aus dem Bayer-Verfahren und unterzieht diese einer leichten Kalzination (d.h. einer Erhitzung auf hohe Temperaturen, jedoch unter den Schmelz- oder Verflüssigungspunkt, wobei ein teilweiser Feuchtigkeitsverlust eintritt). Unerwarteterweise wurde gefunden, daß das aktivierte Matrixmaterial sich nach dem Kalzinationsschritt in alkalischen Aluminatlaugen, wie sie in dem wohlbekannten Bayer-Verfahren entstehen, leicht auflöst. Das ermöglicht die Einbeziehung des Verfahrens in den Bayer-Hauptprozeß in der Form eines Nebenstroms. Darüberhinaus führt dieses Verfahren zur Gewinnung eines feinkristallinen Böhmits mit erhöhter Oberfläche.

Hydrargillit (Aluminiumtrihydroxid) aus dem Bayer-Verfahren, beispielsweise bestehend aus Hydrargillitteilchen, (90% davon sind größer als 45 µm), wird einer leichten Kalzination unterworfen, typischerweise in einem Drehrohrofen bei Temperaturen oberhalb etwa 300 °C, jedoch vorzugsweise bei 350 °C (im Falle der Drehrohrofenkalzinierung), während einer Zeitspanne, die lang genug ist, um den Glühverlust (Glv) des "aktivierten" Hydrargillits auf weniger als 20%, vorzugsweise auf 11 bis 12%, zu senken. Je höher die Temperatur, desto kürzer die benötigte Verweilzeit. Bei diesen Bedingungen enthält das leicht kalzinierte Material etwa 30% kristallinen Böhmit, wie durch Röntgen-Diffraktometer-Analyse bestimmt wird, welcher in einem Matrixmaterial eingebettet ist, die etwa zur Hälfte aus chi-Aluminiumoxid besteht (einer thermodynamisch instabilen Übergangsform des Aluminiumoxids, welche bedeutende Mengen von Hydroxylionen enthält), wobei der Rest aus einem Material mit einer derart kleinen Korngröße besteht, daß es infolgedessen durch Röntgen-Diffraktormeter-Analyse nicht mehr identifiziert werden kann. Das aktivierte Matrixmaterial enthält wenig oder keinen Hydrargillit, alpha-$Al_2O_3$ oder gamma-$Al_2O_3$, die alle keine erhöhte Löslichkeit in alkalischen Aluminatlaugen besitzen, welche für das aktivierte Matrixmaterial gemäß der vorliegenden Erfindung charakteristisch ist.

Nach dem Kalzinationsschritt des Verfahrens wird das böhmithaltige aktivierte Material mit der Dünnlauge aus dem Bayer-Verfahren angerührt, typischerweise in einem ansatzweise betriebenem Reaktor, welcher mit einer Vorrichtung zur mechanischen Umrührung des Reaktorinhalts unter atmosphärischem Druck ausgerüstet ist. Typischerweise wird eine Temperatur von 85 °C verwendet.

Der Auflösungsschritt wird solange fortgesetzt bis alles aktivierte Matrixmaterial aufgelöst ist und alle Böhmitteilchen suspendiert sind. Typischerweise benötigt man dazu etwa 8 Stunden, bei 85 °C, wobei eine kürzere Zeitspanne bei höheren Temperaturen ausreichen würde. Nach der Auflösung wird die böhmithaltige Suspension filtriert, typischerweise mit einem Vakuumfilter, und das kristalline Böhmitprodukt gewaschen und getrocknet. Ein Fließbild dieses Verfahrens mit typischen Betriebsdaten zeigt Fig. 2.

In einer alternativen Ausführungsweise der vorliegenden Erfindung kann der Auflösungsschritt mit einer synthetischen Bayer-Prozeß-Lauge (alkalisches Aluminat) entsprechender Zusammensetzung oder mit einer Bayer-Lauge, die oxidiert oder gebleicht wurde zwecks Entfernung gefärbter organischer Substanzen, vorgenommen werden, um ein weißeres und helleres Böhmitprodukt zu gewinnen.

Eine synthetische Bayer-Lauge (beispielsweise 140 g/l $Na_2O$, 60 g/l $Al_2O_3$ enthaltend) ist frei von den normalerweise in den Bayerlaugen anwesenden organischen Verunreinigungen. Es ist auch möglich, Mischungen der synthetischen Laugen und der Bayer-Dünnlaugen in dem Verfahren gemäß der vorliegenden Erfindung zu verwenden.

Die für den Auflösungsschritt verwendete Lauge, ob Bayer-Dünnlauge oder synthetische Lauge oder eine Mischung, muß anfangs mindestens die Menge Aluminiumoxid enthalten, welche der thermodynamischen Gleichgewichtslöslichkeit des Böhmits bei den verwendeten Versuchstemperaturen entspricht. Zum Beispiel bei einer Alkalikonzentration in der Lauge von 140 g/l (ausgedrückt als $Na_2O_{frei}$-Konzentration) bei einer Temperatur von 85 °C muß die Aluminiumoxidkonzentration ungefähr 60 g/l betragen. Unter diesen Bedingungen löst sich der Böhmit nicht auf und bleibt ausgeschieden aus der Lösung; aufgelöst wird nur das aktivierte Matrixmaterial. Ferner ist es bei der relativ niedrigen Temperatur, bei der der Auflösungsschritt durchgeführt wird, unmöglich, daß sich die kleinen röntgenamorphen Teilchen des Materials rehydratisieren um Böhmit zu bilden. Höhere Aluminiumoxidkonzentrationen in der Größe von 150 - 155 g/l (bei einer $Na_2O_{frei}$-Konzentration von 140 g/l) ergeben sich einfach durch Erhöhung der Auflösungstemperatur auf 95 - 100°C und durch Vergrößerung der Menge des "aktivierten" Hydrargillits. Die nach der Abtrennung der Kristalle des Böhmitproduktes erhaltene Lauge enthält eine relativ hohe Konzentration an Aluminiumoxid und kann deshalb direkt in den Einlauf des Hydroxidausrührkreislaufs des Bayer-Verfahrens zurückgeführt werden. Wenn man ein Produkt herstellen will, welches 100% Böhmit nach der Röntgen-Diffraktometer-Analyse enthält, gibt es einige potentielle Schwierigkeiten zu vermeiden.

Die Auflösungszeit muß lang genug sein um alles aktivierte Matrixmaterial zu lösen, aber nicht so lang, daß die Gefahr der Keimbildung von Hydrargillit bei den hohen Aluminiumoxidkonzentrationen, welche erreicht werden können, entsteht. Das würde zu Hydrargillitausscheidung und zu Verunreinigung des Böhmits führen. Um diesem Problem auszuweichen, ist es möglich, kleine Mengen von Laugenstabilisatoren wie Kalziumionen in Form von Kalziumkarbonat ($CaCO_3$) in Mengen von 30 zu 50 mg/l der Lauge zuzugeben.

Korngrößen und andere physikalische Eigenschaften der Böhmitprodukte, die in drei getrennten Versuchen gewonnen wurden zeigt Tabelle 1.

Tabelle 1

| **Eigenschaften des gewonnenen Böhmits** | | | | |
|---|---|---|---|---|
| Versuch-Nr. | Glühverlust** % | Spezif. Oberfl. ($m_2$/g) | $D_{50}$* (μm) % | Gesamt $Na_2O$ |
| 1 | 17,4 | 38 | 1,4 | 0,27 |
| 2 | 16,0 | 27 | 1,3 | 0,33 |
| 3 | 16,2 | 22 | 1,4 | 0,49 |

*mittlerer Durchmesser,
ermittelt durch Coulter Counter mit 30 μm Rohrdurchmesser.
** Glühverlust bei 1200°C des Böhmitproduktes.

Die Ausbeute an Böhmit aus jedem der drei Versuche, die in Tabelle 1 angegeben wurden, betrug 100% derjenigen, die anhand der Ausgangsanalysen mittels Röntgen-Diffraktormeter-Analysen des leichtkalzinierten Hydrargillits zu erwarten waren, wenn die anwesenden Verunreinigungen und der Wasserüberschuß über das theoretische Maximum von 15% berücksichtigt wurden.

Die spezifischen Oberflächen in der Tabelle 1 sind wesentlich größer als diejenigen, die man bei kristallinem Böhmit ähnlicher Korngröße erwarten würde, d.h. 4-6 $m^2$/g.

Fig. 3 (a) zeigt eine Elektronenmikroskopaufnahme eines typischen Hydrargillitanfangsteilchens. Das hieraus erhaltene Böhmitprodukt nach dem Verfahren der vorliegenden Erfindung zeigt Fig. 3 (b). Fig. 4 zeigt Elektronenmikroskopaufnahmen bei höheren Vergrößerungen, welche die Begründung für die höher als erwartete spezifische Oberfläche der Böhmitproduktkristalle liefern. Die Oberflächen der Böhmitkristalle sind irregulär und löcherig, wahrscheinlich bedingt durch den Wasserabgabemechanismus bei der anfänglichen Kalzinierung des Hydrargillits.

Die Eigenschaften des aktivierten Hydrargillits bei unterschiedlichen Kalzinationsbedingungen werden in Tabelle 2 aufgeführt und graphisch in Fig. 1 dargestellt.

Tabelle 2

Eigenschaften des "aktivierten" Hydrargillits

| Versuch-Nr. | Kalzinierg.-Bedingungen Anfangs-Temp. (°C) | Zeit bis zur Temp. (min) | Eigenschaften des Produkts Glv. (%) | Böhmitgehalt (%) | Spezif. Oberfl. ($m^2/g$) | Aluminiumoxid aufgelöst in Dünnlauge (g/l) nach den folg. Zeiten bei 85°C * 1 | 2 | 3 | 5 | 8 (Std.) |
|---|---|---|---|---|---|---|---|---|---|---|
| 1 | 256 | 30 | 28.9 | 26 | 13.2 | 111.5 | 111.6 | 111.3 | 111.1 | - |
| 2 | 282 | 30 | 23.1 | 27 | 126.3 | 121.9 | 125.1 | 126.5 | 127.2 | 127.2 |
| 3 | 320 | 30 | 10.6 | 30 | 219.0 | 121.2 | 128.7 | 132.5 | 137.5 | 141.6 |
| 4 | 340 | 30 | 11.1 | 31 | 232.5 | 119.2 | 127.8 | 134.5 | 139.4 | 141.9 |
| 5 | 339 | 15 | 13.5 | 30 | 200.0 | 121.3 | 128.0 | 132.3 | 137.2 | 141.9 |
| 6 | 324 | 10 | 20.8 | 28 | 108.9 | 117.0 | 121.7 | -- | 123.3 | 123.7 |
| 7 | 345 | 20 | 11.4 | 28 | 214.5 | 122.0 | 127.7 | 132.5 | 137.8 | 141.7 |
| 8 | 356 | 20 | 10.9 | 30 | 225.0 | 121.6 | 128.2 | 133.8 | 139.3 | 142.0 |
| 9 | 378 | 30 | 8.0 | 28 | 241.2 | 112.1 | 119.6 | 125.2 | 133.9 | 139.1 |
| 10 | 419 | 30 | 6.8 | 26 | 234.7 | 106.4 | 113.9 | 119.5 | 127.5 | 132.6 |
| 11 | 460 | 30 | 5.9 | 19 | 239.0 | 95.27 | 103.6 | 108.2 | 115.1 | 121.6 |
| 12 | 502 | 30 | 3.0 | 2 | 191.9 | 96.99 | 101.3 | 106.4 | 109.7 | 114.6 |

* 140 g/l $Na_2O_{frei}$-Konzentration

Tabelle 2 zeigt, daß der während der Kalzinierung entstehende Böhmit relativ schnell gebildet wird. Darüberhinaus ist die Menge des Böhmits relativ konstant bei 28-31% im Temperaturbereich von 300 bis 400 °C. Die Ergebnisse zeigen auch die Wichtigkeit der Glühverlustkontrolle bei dem kalzinierten Hydrargillit.

In Fig. 1 wird die Beziehung zwischen der spezifischen Oberfläche, der Löslichkeit und dem Glühverlust des böhmithaltigen "aktivierten" Hydrargillits graphisch gezeigt. Es ist aus Fig.1 ersichtlich, daß die Punkte der Maxima bei den Kurven der Löslichkeit und der spezifischen Oberfläche nicht übereinstimmen. Die maximale Löslichkeit tritt bei 10-13% Glv. auf, während die maximale spezifische Oberfläche bei 6-8% Glv. erreicht wird. Ohne daß man sich durch die Theorie einschränken lassen möchte, wird angenommen, daß bei etwa 400 ° C der anfangs gebildete Böhmit sich in gamma-Aluminiumoxid umzuwandeln beginnt. Letzteres ist bei 85 ° C weniger löslich in der Bayer-Dünnlauge als das aktivierte Matrixmaterial, welches direkt bei der anfänglichen Hydrargillit-Kalzination entsteht.

Um ein Produkt herzustellen, welches im wesentlichen 100% Böhmit ist, wurden Versuchsbedingungen verwendet, die aus den Angaben der Tabelle 2 abgeleitet wurden. Die bevorzugte Ausführung der vorliegenden Erfindung verwendet die Bedingungen des Versuchs Nr.8, d.h. eine Endtemperatur von 356 ° C und eine Kalzinationszeit von 20 Minuten. Unter den vorerwähnten Bedingungen wurde genug Material für fünf Auflösungsversuche hergestellt, bei denen Böhmit in alkalischer Aluminatlauge mit etwa 140 g/l $Na_2O_{frei}$-Konzentration bei der vorgegebenen Aluminiumoxidkonzentration von 140 g/l hergestellt wurde. Ergebnisse zeigt Tabelle 3.

Tabelle 3

**Eigenschaften des hergestellten Böhmits in der Abhängigkeit von der Auflösungszeit hei 85°C**

| Versuch Nr. | Auflösungszeit (Std.) | Prozent Böhmit | Spezifische oberfl. ($m^2/g$) |
|---|---|---|---|
| 1 | 4 | 82 + röntgenamorphes Material | 57 |
| 2 | 6 | 90 + röntgenamorphes Material | 48 |
| *3 | 8 | 100 | 38 |
| *4 | 8 | 100 | 27 |
| *5 | 8 | 100 | 22 |
| 6 | 10 | 89 + Hydrargillit | 13 |

*Diese Ergebnisse sind in Tabelle 1 unter Versuch 1, 2 und 3 aufgeführt.

Die Ergebnisse in Tabelle 3 weisen auf die potentiellen Schwierigkeiten hin, welche vermieden werden müssen, um einen im wesentlichen 100%-igen Böhmit herzustellen. Beispielsweise muß die Auflösungszeit lang genug sein, um das gesamte Matrixmaterial aufzulösen, aber nicht so lang, daß die Gefahr der Hydrargillitkeimbildung und damit der Verunreinigung des Böhmitprodukts besteht. In den Versuchen 3 - 5 in Tabelle 3 führte eine Auflösungszeit von 8 Stunden zur Gewinnung von 100%-igem Böhmit, während Erhitzung für 10 Stunden den Böhmitgehalt auf 89% herabsetzte und zu Wiederausfällung des Ausgangshydrargillits führte. Wie schon erwähnt, kann dieses letztere Problem durch die Zugabe kleinerer Mengen von $CaCO_3$ vor der Auflösung des "aktivierten" Hydrargillits minimiert werden.

Die Erfindung wurde oben beschrieben, wobei Bezug genommen wurde auf die bevorzugte Durchführungsweise. Dem Durchschnittsfachmann ist ersichtlich, daß viele Zugaben, Ersatzmaßnahmen und/oder Streichungen vorgenommen werden können, ohne dabei von dem Bereich der im Nachfolgenden beanspruchten Erfindung abzuweichen.

**Patentansprüche**

1. Verfahren zur Herstellung von feinen Böhmitkristallen, dadurch gekennzeichnet, daß in einer ersten Verfahrensstufe grobe Hydrargillitpartikel durch Kalzination bei Temperaturen oberhalb 300 ° C umgewandelt werden in grobe Partikel bestehend aus einer im wesentlichen chi-$Al_2O_3$ enthaltenden Matrix, wobei in dem Matrixmaterial feine Böhmitkristalle mit hoher spezifischer Oberfläche gebildet werden und in einer zweiten Verfahrensstufe diese Böhmitkristalle durch Auflösen des sie umgebenden Matrixmaterials in einer alkalischen Aluminatlauge, in der sich die Böhmitkristalle nicht auflösen, freigelegt werden
und in einer dritten Verfahrensstufe die Böhmitkristalle aus der Aluminatlauge abgetrennt werden.

2. Verfahren gemäß Anspruch 1, dadurch gekennzeichnet, daß das Matrixmaterial hauptsächlich aus chi-$Al_2O_3$ im wesentlichen frei von Hydrargillit, gamma-$Al_2O_3$ und alpha-$Al_2O_3$ gebildet wird.

3. Verfahren gemäß einem der vorhergehenden Ansprüche, dadurch gekennzeichnet, daß als Aluminatlauge eine Dünnlauge des Bayer-Verfahrens eingesetzt wird.

4. Verfahren gemäß einem der vorhergehenden Ansprüche, dadurch gekennzeichnet, daß die Auflösung des Matrixmaterials bei Temperaturen zwischen 60 und 120 °C durchgeführt wird.

5. Verfahren gemäß einem der vorhergehenden Ansprüche, dadurch gekennzeichnet, daß die kalzinierten Hydrargillitpartikel unter normalen Temperatur- und Druckbedingungen in Kontakt mit der Aluminatlauge belassen werden, bis das Matrixmaterial vollständig gelöst ist und der Feststoff in der Lauge zu 100% aus Böhmit besteht.

6. Verfahren gemäß einem der vorgehenden Ansprüche, dadurch gekennzeichnet, daß die Böhmitkristalle eine mittlere Korngröße von 1 bis 2 $\mu$m aufweisen.

7. Verfahren gemäß einem der vorhergehenden Ansprüche, dadurch gekennzeichnet, daß die spezifische Oberfläche der Böhmitkristalle 20 bis 40 $m^2$/g beträgt.

8. Verfahren gemäß einem der vorhergehenden Ansprüche, dadurch gekennzeichnet, daß die nach dem Auflösen des Matrixmaterials und Abtrennen der Böhmitkristalle anfallende Dicklauge in den Einlauf der Hydroxidausrührer des Bayer-Verfahrens rückgeführt wird.

9. Verfahren gemäß einem der vorhergehenden Ansprüche, dadurch gekennzeichnet, daß zur Auflösung des Matrixmaterials eine reine alkalische Aluminatlauge oder eine Dünnlauge des Bayer-Verfahrens, die frei von farbigen organischen Bestandteilen ist, eingesetzt wird.

10. Verfahren gemäß einem der vorhergehenden Ansprüche, dadurch gekennzeichent, daß der alkalischen Aluminatlauge ein stabilisierendes Mittel zur Hemmung der Hydrargillitkeimbildung zugesetzt wird.

11. Verfahren gemäß Anspruch 10, dadurch gekennzeichnet, daß das stabilisierende Mittel Kalziumionen enthält.

12. Verfahren gemäß Anspruch 11, dadurch gekennzeichnet, daß Kalziumionen in einer Menge von 30 bis 50 mg/l der Aluminatlauge zugegeben werden.

13. Verfahren gemäß einem der vorhergehenden Ansprüche, dadurch gekennzeichnet, daß als Aluminatlaugen zur Auflösung des Matrixmaterials Dünnlaugen des Bayer-Verfahrens, synthetische alkalische Aluminatlaugen oder deren Mischungen verwendet werden.

14. Teilkalziniertes Aluminiumhydroxid enthaltend kristallinen Böhmit, dadurch gekennzeichnet, daß das teilkalzinierte Aluminiumhydroxid eine dem chi-$Al_2O_3$ ähnliche Kristallstruktur hat und im wesentlichen frei ist von Hydrargillit, gamma-Aluminiumoxid und alpha-Aluminiumoxid.

15. Böhmitkristalle, gekennzeichnet durch eine durchschnittliche Korngröße von 1 bis 2 Mikrometer und eine spezifische Oberfläche von etwa 20 bis zu etwa 40 $m^2$/g, wobei die Böhmitkristalle keine anderen Aluminiumoxide oder -hydroxide enthalten.

**Claims**

1. A process for the production of fine boehmite crystals, characterised in that in a first process step coarse hydrargillite particles are converted by calcination, at temperatures exceeding 300 °C, into coarse particles composed of a matrix substantially containing chi-$Al_2O_3$, wherein fine boehmite crystals with a large specific surface are formed in the matrix material,
and in a second process step these boehmite crystals are released by dissolution of the matrix material, by which they are surrounded, in an alkaline aluminate lye in which the boehmite crystals do not dissolve,
and in a third process step the boehmite crystals are separated from the aluminate lye.

2. A process as claimed in Claim 1, characterised in that the matrix material is mainly formed from chi-

$Al_2O_3$,substantially free of hydrargillite, gamma-$Al_2O_3$ and alpha-$Al_2O_3$.

**3.** A process as claimed in one of the preceding claims, characterised in that a thin lye in accordance with the Bayer process is used as aluminate lye.

**4.** A process as claimed in one of the preceding claims, characterised in that the dissolution of the matrix material is carried out at temperatures of between 60 and 120°C.

**5.** A process as claimed in one of the preceding claims, characterised in that the calcinated hydrargillite particles are left in contact with the aluminate lye under normal temperature and pressure conditions until the matrix material has completely dissolved and the solid material in the lye consists of 100% boehmite.

**6.** A process as claimed in one of the preceding claims, characterised in that the boehmite crystals have an average grain size of 1 to 2 $\mu$m.

**7.** A process as claimed in one of the preceding claims, characterised in that the specific surface of the boehmite crystals amounts to 20 to 40 $m^2$/g.

**8.** A process as claimed in one of the preceding claims, characterised in that the thick lye which forms following the dissolution of the matrix material and the separation of the boehmite crystals is recycled to the input of the hydroxide elimination stage of the Bayer process.

**9.** A process as claimed in one of the preceding claims, characterised in that a pure alkaline aluminate lye, or a thin lye in accordance with the Bayer process which is free of coloured organic constituents is used to dissolve the matrix material.

**10.** A process as claimed in one of the preceding claims, characterised in that a stabilizing means is added to the alkaline aluminate lye to inhibit hydrargillite nucleation.

**11.** A process as claimed in Claim 10, characterised in that the stabilizing means contains calcium ions.

**12.** A process as claimed in Claim 11, characterised in that calcium ions are added to the aluminate lye in a quantity of 30 to 50 mg/l.

**13.** A process as claimed in one of the preceding claims, characterised in that thin lyes in accordance with the Bayer process, synthetic alkaline aluminate lyes or mixtures thereof are used as aluminate lyes to dissolve the matrix material.

**14.** Partially calcinated aluminium hydroxide containing crystalline boehmite, characterised in that the partially calcinated aluminium hydroxide has a crystalline structure similar to chi-$Al_2O_3$ and is substantially free of hydrargillite, gamma-aluminium oxide and alpha-aluminium oxide.

**15.** Boehmite crystals, characterised by an average grain size of 1 to 2 micrometers and a specific surface of approximately 20 up to approximately 40 $m^2$/g, where the boehmite crystals contain no other aluminium oxides or -hydroxides.

**Revendications**

**1.** Procédé de préparation de cristaux de boehmite fine, caractérisé en ce qu'on transforme dans une première étape du procédé des particules d'hydrargillite grossières par calcination à des températures supérieures à 300°C en particules grossières constituées d'une matrice contenant pour l'essentiel de $\chi$-$Al_2O_3$ , opération dans laquelle il se forme dans la matière de matrice de fins cristaux de boehmite à surface spécifique élevée,
et dans une seconde étape du procédé on libère ces cristaux de boehmite par dissolution de la matière de matrice qui l'entoure dans une lessive d'aluminate alcalin dans laquelle les cristaux de boehmite ne se dissolvent pas,
et dans une troisième étane du procédé on sépare les cristaux de boehmite de la lessive d'aluminium.

2. Procédé selon la revendication 1, caractérisé en ce que la matière de matrice est constituée principalement de $\chi$-$Al_2O_3$ pour l'essentiel dépourvue d'hydrargillite, de $\gamma$-$Al_2O_3$ et d'$\alpha$-$Al_2O_3$ .

3. Procédé selon l'une des revendications précédentes, caractérisé en ce qu'on utilise comme lessive d'aluminium une lessive diluée du procédé Bayer.

4. Procédé selon l'une des revendications précédentes, caractérisé en ce qu'on effectue la dissolution de la matière de matrice à des températures comprises entre 60 et 120 ° C.

5. Procédé selon l'une des revendications précédentes, caractérisé en ce qu'on laisse les particules d'hydrargillite calcinées dans des conditions normales de température et de pression en contact avec la lessive d'aluminium jusqu'à ce que la matière de matrice soit entièrement dissoute et que le corps solide dans la lessive se compose à 100% de boehmite.

6. Procédé selon l'une des revendications précédentes, caractérisé en ce que les cristaux de boehmite présentent une granulométrie moyenne de 1 à 2 µm.

7. Procédé selon l'une des revendications précédentes, caractérisé en ce que la surface spécifique des cristaux de boehmite s'élève à 20 à 40 $m^2$/g.

8. Procédé selon l'une des revendications précédentes, caractérisé en ce que la lessive épaisse apparue après dissolution de la matière de matrice et séparation des cristaux de boehmite est réintroduite dans l'introduction du produit de délayage d'hydroxyde du procédé Bayer.

9. Procédé selon l'une des revendications précédentes, caractérisé en ce que pour la dissolution de la matière de matrice on utilise une lessive d'aluminate alcaline pure ou une lessive diluée du procédé Bayer qui est dépourvue de composants organiques colorés.

10. Procédé selon l'une des revendications précédentes, caractérisé en ce qu'on ajoute à la lessive d'aluminate alcaline un agent stabilisant pour inhiber la formation de germes d'hydrargillite.

11. Procédé selon la revendication 10, caractérisé en ce que l'agent stabilisant contient des ions calcium.

12. Procédé selon la revendication 11, caractérisé en ce qu'on ajoute des ions calcium à la lessive d'aluminate en une quantité de 30 à 50 mg/l.

13. Procédé selon l'une des revendications précédentes, caractérisé en ce qu'on utilise comme lessives d'aluminium pour dissoudre la matière de matrice des lessives diluées du procédé Bayer, des lessives d'aluminate alcaline synthétique ou leurs mélanges.

14. Boehmite cristalline contenant de l'hydroxyde d'aluminium partiellement calciné, caractérisé en ce que l'hydroxyde d'aluminium partiellement calciné a une structure cristalline voisine de celle du $\chi$-$Al_2O_3$ et est sensiblement dépourvue d'hydrargillite, d'oxyde de $\gamma$-aluminium et d'oxyde d'$\alpha$-aluminium.

15. Cristaux de boehmite caractérisés par une granulométrie moyenne de 1 à 2 µm et une surface spécifique d'environ 20 à environ 40 $m^2$/g, où les cristaux de boehmite ne contiennent pas d'autres oxydes ou hydroxydes d'aluminium.

FIG. 1

EIGENSCHAFTEN DES KALZINIERTEN HYDRARGILLITS

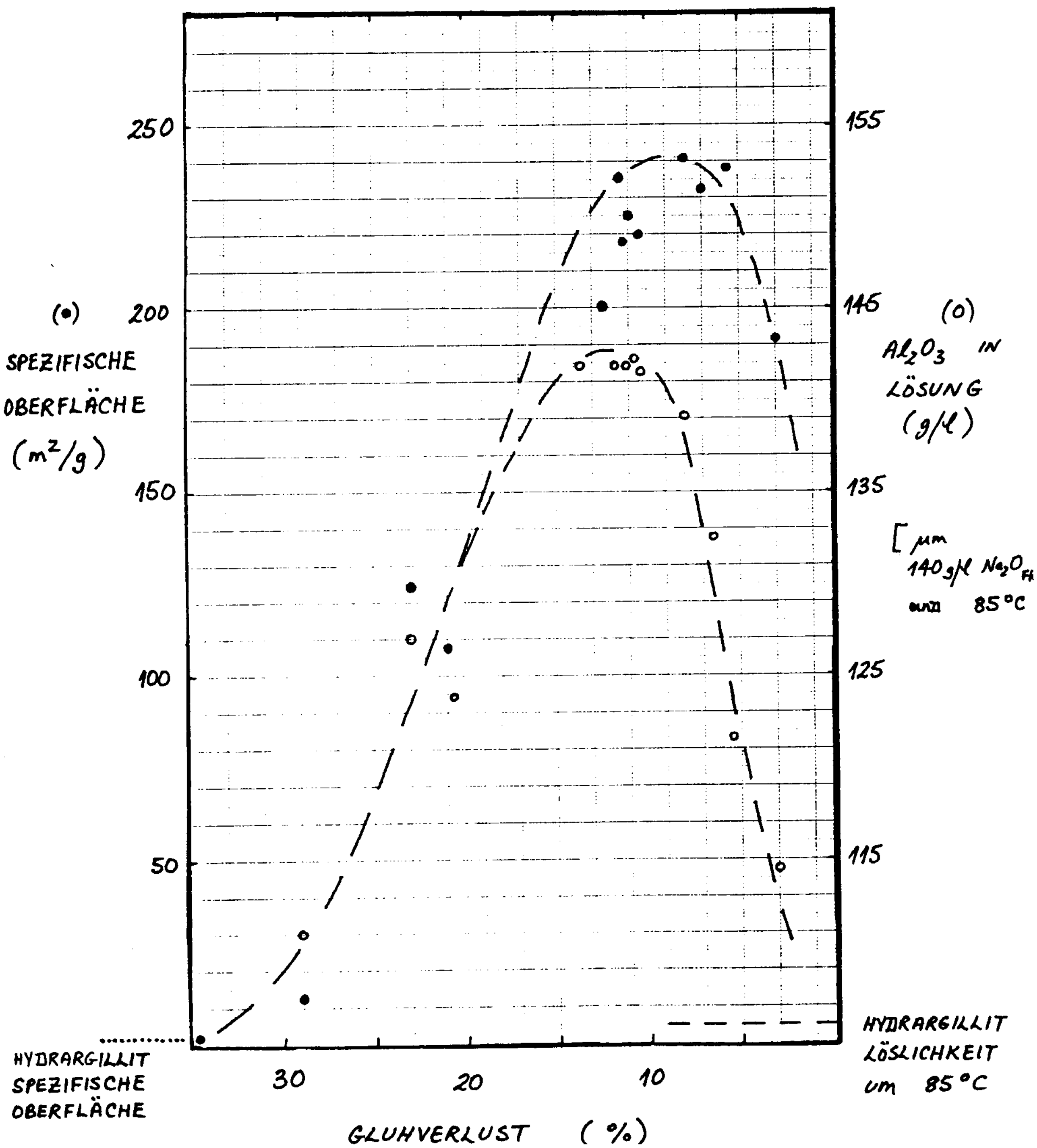

Fig. 2

**Fließbild des Verfahrens (diagr.)**

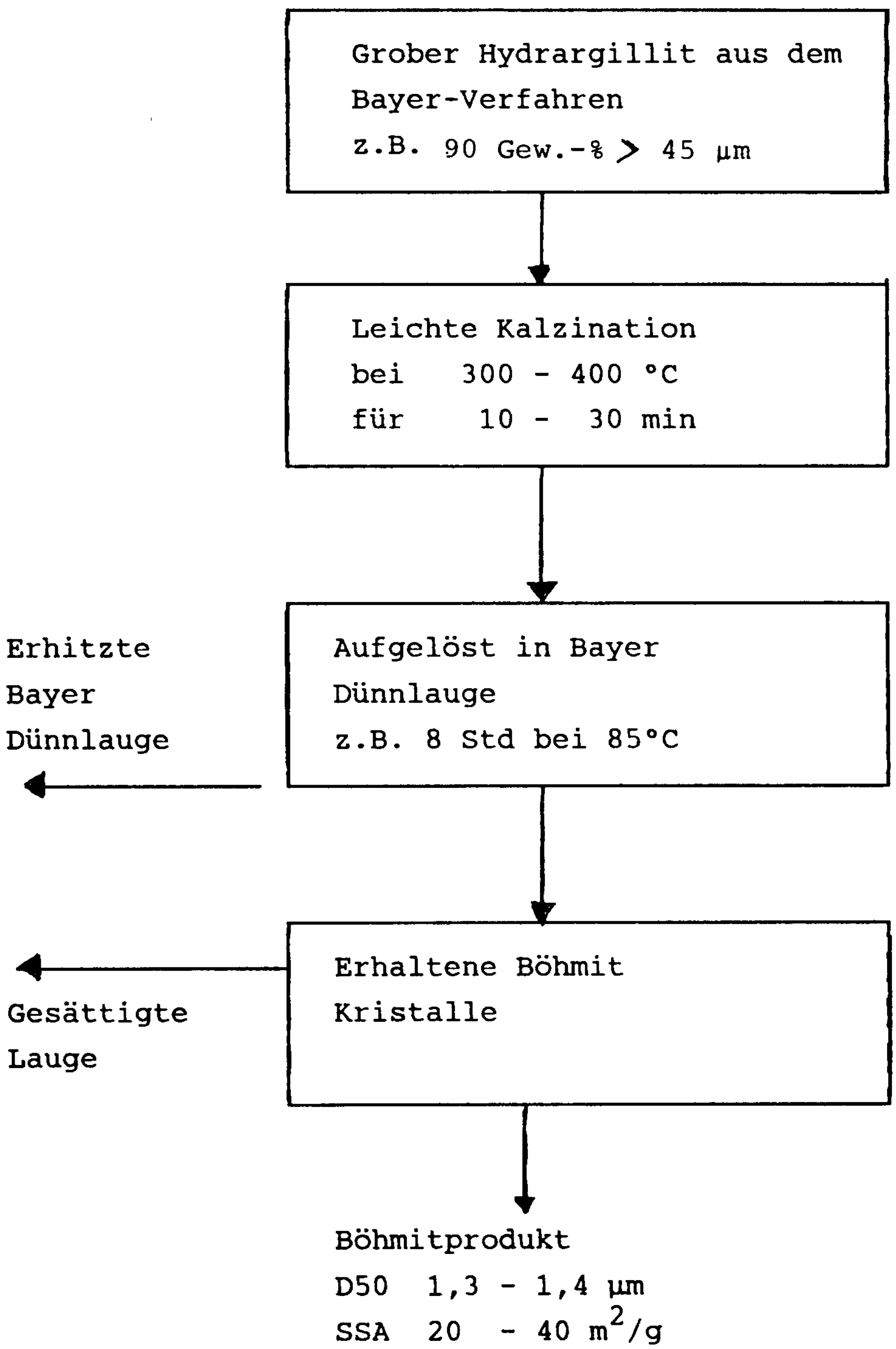

Fig. 3

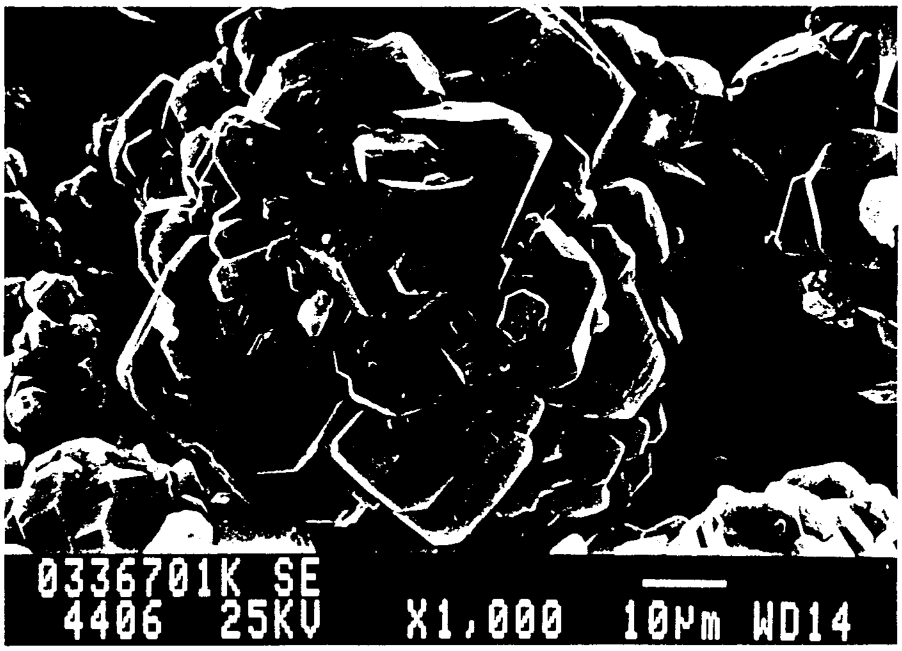


(a) AUSGANGSMATERIAL - GIBBSIT

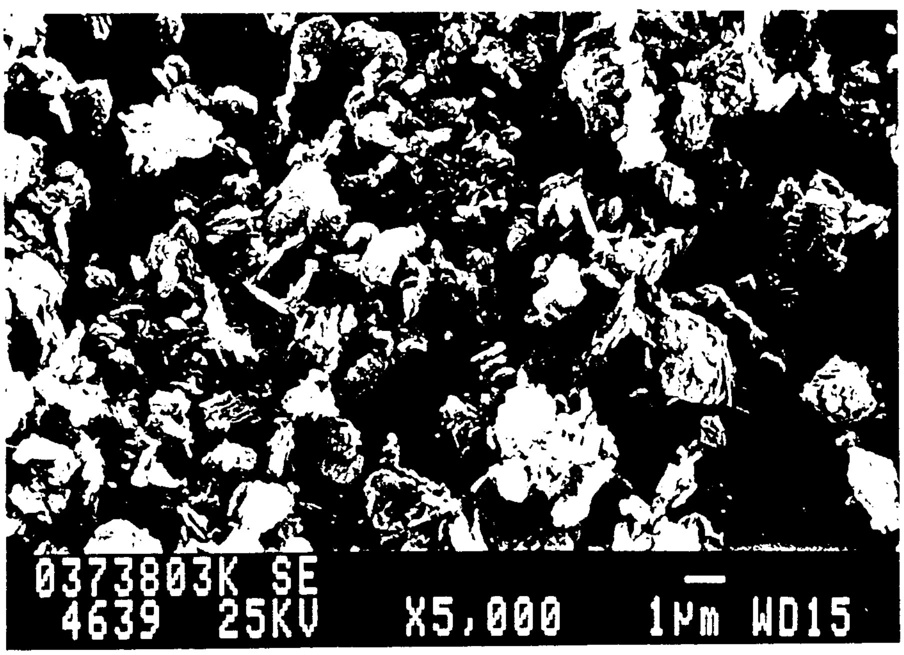


(b) PRODUKT - BÖHMIT

Fig. 4

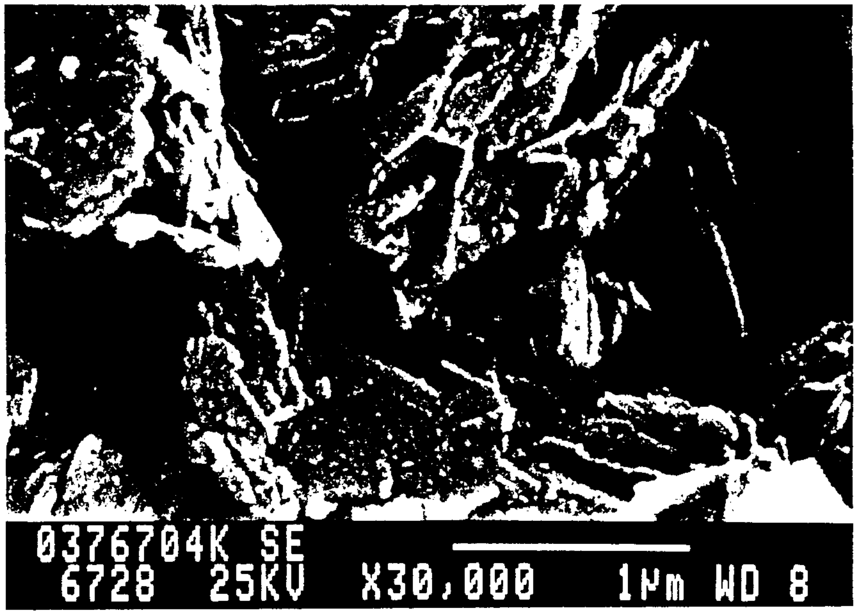


(a) BÖHMIT PRODUKT

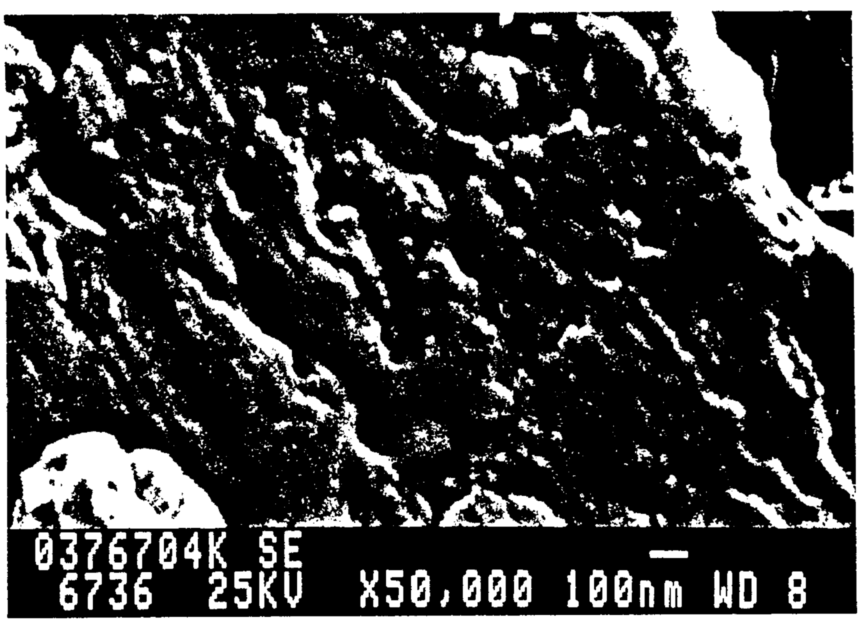


(b) BÖHMIT PRODUKT